# EUROPÄISCHE PATENTANMELDUNG

(11) **EP 2 711 163 A1**
(43) Veröffentlichungstag der Anmeldung: **26.03.2014**
(21) Anmeldenummer: 12405104.6
(22) Anmeldetag: 21.09.2012
(51) Int. Cl.: B29C 67/00, B01F 5/06

(54) **Dreidimensionale Formkörper**

(71) Anmelder: Hirschberg Engineering, 8408 Winterthur (CH)
(72) Erfinder: Hirschberg, Sebastian, 8408 Winterthur (CH)
(74) Vertreter: Rüfenacht, Philipp Michael

(57) **Zusammenfassung**

Ein Aspekt der Erfindung betrifft einen Formkörper der in mindestens einer Strömungsrichtung von einem Fluid durchströmbar ist. Der Formkörper umfasst eine Vielzahl von zueinander parallelen, aufeinander folgenden Schichten. Jede Schicht weist Aussparungen und mindestens eine Verbundfläche mit einer folgenden oder vorangegangenen Schicht auf. Jede Aussparung einer Schicht überlappt mindestens einen Bereich der Aussparung einer folgenden oder vorangegangenen Schicht. Dadurch bilden die Schichten insgesamt im Formkörper treppenförmige Stege aus. Der Formkörper umfasst mindestens zwei solcher Stege. Die vorliegende Erfindung betrifft zudem Herstellungsverfahren zur Herstellung besagter Formkörper, sowie die Verwendung besagter Formkörper und Reaktoren, welche besagte Formkörper umfassen.

## Beschreibung

### Technisches Gebiet

Die Erfindung betrifft Formkörper die in mindestens einer Strömungsrichtung von einem Fluid durchströmbar sind. Ausserdem betrifft die vorliegende Erfindung Verfahren zur Herstellung solcher Formkörper sowie die Verwendung besagter Formkörper. Insbesondere betrifft die vorliegende Erfindung Formkörper, Verfahren zu deren Herstellung und die Verwendung von Formkörpern gemäss den Oberbegriffen der unabhängigen Ansprüche.

### Stand der Technik

In sehr vielen Prozessen der Verfahrenstechnik spielen Fluidströmungen unterschiedlicher Natur eine wesentliche Rolle. Zum Beispiel kann das strömende Fluid selbst das Medium sein, das im Prozess bearbeitet wird, oder das Fluid dient zur Temperierung oder z. B. zum Transport des bearbeiteten Mediums. Im strömenden Medium können Reaktionen ablaufen. Zum Beispiel können Phasenübergänge im Medium ablaufen oder bewirkt werden. In Strömungen mit mehreren Phasen können Tropfen zerteilt oder koalesziert werden. Es können Fluide vermischt oder getrennt werden. Es kann zum Ausfällen von Feststoffen kommen, etc.

Gemeinsam ist diesen strömungstechnischen Prozessen, dass man zur Erreichung guter Wirkungsgrade der Prozesse die Anlagen bezüglich der Strömungsführung optimieren muss. Dabei haben sich, je nach Anwendung, verschiedene Konzepte als wirkungsvoll erwiesen.

Statische Mischer werden seit Anfangs der 1970er Jahre in der Verfahrenstechnik für verschiedene, hauptsächlich kontinuierliche, strömungsdominierte Prozesse eingesetzt. Für Anwendungen im niedrigen bis mittleren Reynoldszahl - Bereich hat sich hier besonders der Mischertyp mit gekreuzt angeordneten Stegen bewährt (CH642564). Er wird in der Praxis als Mischelement zum Einbau in Rohrleitungen verwendet. Dabei sind Produkte mit Durchmessern zwischen wenigen Millimetern und mehreren 100 mm und 4 bis 8 Stegen über dem Rohrdurchmesser im Angebot. Er zeichnet sich dadurch aus, dass er bei sehr vielen Mischaufgaben zuverlässig funktioniert, auch wenn die Viskositäten der zu vermischenden Fluide stark unterschiedlich sind, oder wenn es sich um sehr langsame, kriechende Strömungen handelt. Dieser Mischer kann ausserdem auch zur Dispergierung zweier unmischbarer Flüssigkeiten oder eines Gases in einer Flüssigkeit eingesetzt werden. Des Weiteren kann durch den Einsatz derartiger Mischelemente in Rohren der Wärmeübergang zwischen dem Rohr und dem strömenden Medium erhöht werden. Dieser Effekt ist im Bereich laminarer Reynoldszahlen besonders ausgeprägt, weswegen derartige Mischelemente vor allem in Wärmetauschern für hochviskose Medien eingesetzt werden. Ein weiteres Einsatzgebiet sind chemische Verfahren mit konkurrierenden, parallel laufenden Reaktionen, in denen ein möglichst enges Verweilzeitspektrum im durch einen Rohrreaktor strömenden Fluid erreicht werden soll. Hier lässt sich durch den Einbau statischer Mischelemente in Rohrleitungen das Verweilzeitspektrum deutlich verbessern.

Seit einigen Jahren werden intensiv Mikromischer und Mikroreaktoren entwickelt und auch in der Praxis eingesetzt. Unter Mikromischern und Mikroreaktoren versteht man statische Mischer mit Kanälen und Mischstrukturen, deren Abmessungen kleiner als 1mm sind. Es existiert eine sehr grosse Zahl unterschiedlicher Mikromischer und Mikroreaktoren, deren Konstruktionsweise oft an die Möglichkeiten von Fertigungstechnologien für derartig kleine Strukturen angepasst wurde. Sie zeichnen sich aufgrund ihrer kleinen Dimensionen durch ein sehr grosses Oberflächen zu Volumen Verhältnis aus und erlauben deswegen eine ausgezeichnete Temperaturkontrolle. Ausserdem können mit sehr kleinen Mischern und Mischkanälen auch sehr kurze Mischzeiten realisiert werden. Mikroreaktoren und Mikromischer haben vor allem dort Vorteile, wo sehr kleine Produktmengen verarbeitet werden sollen, wo sehr viel Reaktionswärme effizient abgeführt werden muss oder wo mit sehr gefährlichen Stoffen hantiert wird und deswegen die kleinen Dimensionen und die damit einhergehenden kleinen Produktvolumina im Reaktor ein Sicherheitsmerkmal darstellen. In der Praxis stellt aber der Scale-Up von Laborversuchen zu Pilotmassstab oder gar industriellen Produktionsmassstäben ein Problem dar.

In industriellen Reaktoren, in denen mittels heterogener Katalyse Reaktionen durchgeführt werden, kommen oft Zufallsschüttungen unterschiedlicher Schüttfüllkörper zum Einsatz. Beispiele von Schüttfüllkörpern sind extrudierte Pellets oder variabel geformte Teile aus Metall oder anderen Werkstoffen. Dabei bestehen diese Pellets entweder direkt aus einem Grundmaterial, das den für die geplante Reaktion benötigten Katalysator in der gewünschten Menge enthält, oder sie werden mittels unterschiedlicher Verfahren mit einer Schicht beaufschlagt, die den benötigten Katalysator enthält. Durch die Grösse der Schüttfüllkörper und ihre Form lässt sich der Durchströmungswiderstand beeinflussen und gleichzeitig auch auf den konvektiven Austausch und die Vermischung des Fluids, das den Reaktor durchströmt, Einfluss nehmen. Der Einsatz derartiger Schüttfüllkörper in Rohrreaktoren führt auch zu einem engen Verweilzeitspektrum, was für einige Reaktionen von Vorteil ist. Durch die lose Schüttung der Schüttfüllkörper wird der Wärmetransport durch Wärmeleitung beschränkt, weswegen der Wärmetransport in der Praxis hauptsächlich durch den konvektiven Austausch bzw. die Vermischung der Strömung im Reaktor bestimmt wird. In der Praxis werden derartige Systeme erfolgreich für grosse industrielle Reaktoren eingesetzt. Bei deren Auslegung ist man typischerweise durch die Wärmeabfuhr und die Mischung im Reaktor limitiert. In einigen Fällen ist der Druckverlust in derartigen Reaktionen sehr gross, so dass die Pumpleistung einen relevanten Anteil an den Prozesskosten ausmacht.

Seit den 1990er Jahren wurden verschiedene Verfahren zur Herstellung von Schaumstrukturen aus unterschiedlichen Werkstoffen wie unter anderem Metalle, Metalllegierungen oder Keramik entwickelt. Einsatzgebiete für metallische Schäume sind einerseits Anwendungen aus dem Leichtbaubereich. Durch metallische Schäume, die in Sandwichkonstruktionen eingesetzt werden, lassen sich eine hohe Festigkeit, Steifigkeit und auch Möglichkeiten zur Energieabsorption durch Deformation bei Crashs, bei gleichzeitig geringem Gewicht erzielen. Weitere wichtige Anwendungen findet man bei modernen Batterien und Brennstoffzellen. Auf der anderen Seite lassen sich mittels offenporiger Schäume durchströmte Systeme mit besonderen Eigenschaften erzeugen. Je nach Porengrösse und Leervolumenanteil hat der Schaum sehr gute Wärmeleitungseigenschaften. So lassen sich Wärmetauscher und Reaktoren mit hoher Kühl- oder Heizleistung realisieren. Die Wärmeleitfähigkeit eines Metallschaums hängt allerdings auch von der Stegstruktur ab. Einige Herstellverfahren offenporiger Metallschäume erzeugen Schäume mit hohlen Stegen, bei denen die Stege nur aus einer dünnen Schale bestehen. Das reduziert die Wärmeleitfähigkeit gegenüber Strukturen mit durchgehend metallischen Stegen. Wie bei Schüttfüllkörpern und auch beim Einsatz statischer Mischer wird das Verweilzeitspektrum in einem mit Metallschaum gefüllten Rohrreaktor deutlich enger, was für einige Reaktionen von Vorteil ist (US 2012/0080113 A1). Der konvektive Strömungsaustausch quer zur Hauptströmung ist aber auch in einem Metallschaum nicht sehr gut und wird bei gleicher Durchströmung mit kleineren Porengrössen schlechter. Durch die zufällige Anordnung der Poren im Metallschaum kann ausserdem nicht ausgeschlossen werden, dass im Innern des Schaums lokal Totzonen auftreten oder einzelne Poren in ihrer Grösse signifikant vom Durchschnitt abweichen. Zusammenfassend gilt also: In verschiedenen verfahrenstechnischen Prozessen werden flüssige oder gasförmige Medien oder Mehrphasenströmungen mit flüssigen, gasförmigen und festen Komponenten kontinuierlich verarbeitet, indem sie durch Rohrreaktoren oder Leitungen mit Formkörper gepumpt werden. Durch eine geschickte Wahl der Geometrie der Formkörper kann sichergestellt werden, dass diese verfahrenstechnischen Prozesse besonders effizient ablaufen. Dabei ist es wichtig, dass die Formkörper sowohl für sehr kleine Produktionsmengen in Labor- und Pilotanlagen als auch für grosse industrielle Produktionsanlagen gleichermassen ausgelegt und eingesetzt werden können und dass ein Scale-Up vom Labor zur Pilotanlage bis zur industriellen Grossanlage einfach durchführbar ist. Gleichzeitig ist es natürlich auch entscheidend, dass sich derartige Formkörper mittels effizienten Produktionsverfahren wirtschaftlich herstellen lassen.

### Darstellung der Erfindung

Aufgabe der Erfindung ist es, einen dem eingangs genannten technischen Gebiet zugehörenden Formkörper zu schaffen, welcher besonders effizient ist, kostengünstig hergestellt werden kann und vielseitig einsetzbar ist. Insbesondere soll auch ein kostengünstiges und effizientes Verfahren zur Herstellung eines erfindungsgemässen Formkörpers, bereitgestellt werden. Außerdem wird eine besonders effiziente Verwendung des erfindungsgemässen Formkörpers bereitgestellt.

Die Lösung der Aufgabe(n) ist durch den kennzeichnenden Teil der unabhängigen Ansprüche definiert.

Ein Aspekt der Erfindung betrifft einen Formkörper, der in mindestens einer Strömungsrichtung von einem Fluid durchströmbar ist. Der Formkörper umfasst eine Vielzahl von zueinander parallelen, aufeinander folgenden Schichten. Jede Schicht weist Aussparungen und mindestens eine Verbundfläche mit einer folgenden oder vorangegangenen Schicht auf. Jede Aussparung einer Schicht überlappt mindestens einen Bereich der Aussparung einer folgenden oder vorangegangenen Schicht. Dadurch bilden die Schichten insgesamt im Formkörper treppenförmige Stege aus. Der Formkörper umfasst mindestens zwei solcher Stege.

Der erfindungsgemässe Formkörper kann zum Beispiel strömungsdominierte, verfahrenstechnische Prozesse besonders effizient durchzuführen. Durch seine Innengeometrie kann er verbundene Porensysteme enthalten, die von den zu bearbeitenden Fluiden durchströmt werden. Totzonen, in denen Fluid gefangen bleibt, können so effizient vermieden werden. Mit dem erfindungsgemässen Formkörper kann auch bei sehr kleinen Abmessungen von Strömungskanälen im Innern eine intensive, grossskalige Quervermischung bei der Durchströmung erzielt werden. Die Geometrie der erfindungsgemässen Formkörper ermöglicht, dass ein grosses Verhältnis von Oberfläche zu Volumen realisiert werden kann, was zum Beispiel für den Wärmeübertragung oder für beschichtete Systeme, zum Beispiel für heterogene Katalyse, ein weiterer Vorteil ist.

Mit erfindungsgemässen treppenförmigen Stegen kann ein hoher Wärmeübergang zwischen den Stegen und dem sie durchströmenden Fluid und, je nach verwendetem Werkstoff, auch hohe Wärmeleitungen im Innern des Formkörpers erreicht werden. Durch die Treppenform der Stege wird auch die spezifische Oberfläche der Stege erhöht, was sowohl für den Wärmeübergang als auch für heterogene katalytische Reaktionen von Vorteil sein kann. Die speziell ausgelegte Form der treppenförmigen Stege kann zudem eine intensive Durchmischung einer Strömung quer zur Hauptströmung induzieren. Diese Durchmischung kann auch bei sehr kleinen lokalen Reynoldszahlen auftreten, bei denen zum Beispiel Strömungen durch zufällige Porensysteme, wie sie in offenporigen Metallschäumen vorliegen, nur noch sehr beschränktes Durchmischungsverhalten quer zur Hauptströmung aufweisen.

Im Sinne der vorliegenden Erfindung ist eine Verbundfläche gegeben, wenn mindestens eine physische Berührung zwischen den Schichten besteht. Diese Berührung kann von lediglich einer kantenseitigen Berührung, bis zu einer materiellen Überlappung reichen. Vorzugsweise beträgt die Verbundfläche, respektive flächenmässige Anteil an Überlappung, aber zwischen 5 und 95%, insbesondere zwischen 5 und 50 % von einander zugewandten Schichtoberflächen. Auf die gleiche Weise können die Aussparung als eine Art "Negativbild" der Schichten angesehen werden, wobei die Aussparung der folgenden Schichten die vorangegangenen Aussparungen jeweils in gleichem Umfang überlappen, wie die entsprechenden Schichten eine Verbundfläche auf der zugewandten Seite mit der folgenden Schicht teilen.

Die mindestens eine Strömungsrichtung kann eine Summe aus allen Strömungen durch den Formkörper sein, d. h. der Formkörper kann so ausgestaltet sein, dass er mindestens eine Eingangsöffnung und mindestens eine Ausgangsöffnung aufweist. in diesem Falle wäre die Strömungsrichtung durch den Formkörper ein Vektor in der Achse von der mindestens einen Eingangsöffnung zur mindestens einen Ausgangsöffnung. Dazwischen kann der Formköper eine beliebige Anzahl an Ablenkungen der Strömungsrichtung aufweisen, insbesondere werden diese Ablenkungen durch die Ausgestaltung der Stege verursacht. Die Verbundfläche ist stoffschlüssig.

Im Sinne der vorliegenden Erfindung ist eine Schicht eines Formkörpers als eine Gruppe von Körpern in der gleichen flächenhaften Ausdehnung durch besagten Formkörper zu verstehen. Eine Schicht kann eine Reihe von Lagen umfassen. In diesem Zusammenhang sei auch eine aufeinander folgende Schicht als eine zu besagter flächenhaften Ausdehnung in physischem Kontakt und parallel liegende Schicht zu verstehen.

Im Sinne der vorliegenden Erfindung kann unter einem Fluid jedwede Substanz oder Mischung von Substanzen vorgesehen sein, welche Fluid - Eigenschaften aufweist, d. h. insbesondere einer beliebig langsamen Scherung keinen Widerstand entgegensetzt. In diesem Sinne umfasst Fluide insbesondere Gase, Flüssigkeiten und auch Festkörper oder Mischungen davon, welche Fliesseigenschaften zeigen können.

Im Sinne der vorliegenden Anmeldung sei mit einer Vielzahl eine Anzahl von mindestens zwei gemeint.

Eine Schicht eines erfindungsgemässen Formkörpers kann eine Schichtdicke aufweisen, die von der gewünschten Anwendung abhängig ist. Beispielhaft kann die Schichtdicke von 20 bis 30 µm bis zu 10 mm reichen. Besonders bevorzugt sind Schichtdicken von zwischen 100 und 900 µm. Ein erfindungsgemässer Formkörper kann Aussenabmessungen von zwischen 1 mm und 2000 mm, insbesondere zwischen 4 und 500 mm, insbesondere zwischen 100 und 300 mm, insbesondere um die 50 mm aufweisen, ebenfalls je nach Anwendung.

Ein erfindungsgemässer Formkörper kann in einer besonderen Ausführungsform so ausgestaltet sein, dass er mit einem Minimum an unterschiedlichen aufeinander folgenden zweidimensionalen Strukturen, das heisst Schichten, eine dreidimensionale Struktur aufgebaut werden kann mit den vorgängig genannten funktionellen Eigenschaften.

Ein erfindungsgemässer Formkörper kann eine Ausdehnung in drei Achsen aufweisen, einer X-, einer Y- und einer Z-Achse. Eine dieser Ausdehnungsachsen kann mit der summarischen Strömungsrichtung durch den Formkörper korrespondieren. In einer besonderen Ausführungsform sind die einzelnen Schichten in einer flächenhaften Ausdehnung, welche aus zwei der Ausdehnungsachsen, z. B. der X- und Y-Achsen und einem Bruchteil der gesamten Ausdehnung in der Z-Achse gebildet. Dieser Bruchteil der gesamten Ausdehnung in der Z-Achse bildet dann eine Dicke einer Schicht.

In einer besonderen Ausführungsform ist eine erste Schicht, umfassend eine flächenhafte Ausdehnung, welche aus zwei Ausdehnungsachsen und einem Bruchteil der gesamten Ausdehnung in einer Dritten Achse gebildet wird, gefolgt von einer zweiten Schicht, welche derart versetzt angeordnet ist gegenüber der ersten, dass eine Oberfläche der ersten Schicht welche in Kontakt kommt mit der zweiten Schicht von dieser überlappt wird. Alternativ ist die zweite Schicht so angeordnet, dass die zweite Schicht mit der ersten Schicht mindestens eine gemeinsame Kante aufweist.

In einer besonderen Ausführungsform sind die mindesten zwei Stege im Formkörper derart ausgestaltet, dass sie sich kreuzen.

In einer besonderen Ausführungsform weist der Formkörper eine Ummantelung auf, welche parallel zu der mindestens einen Strömungsrichtung verläuft, insbesondere ist die Ummantelung integraler Bestandteil des Formkörpers, bevorzugt ist der gesamte Formkörper einstückig ausgebildet. Alternativ kann der Formkörper nachträglich mit einer Ummantelung versehen werden.

In einer besonderen Ausführungsform ist der Formkörper so ausgestaltet, dass die Stege sich innerhalb des Formkörpers in periodischen Intervallen wiederholen, d. h. ein Steg kann zum Beispiel von einer Seite der Ummantelung zur anderen Seite der Ummantelung verlaufen, während ein zweiter, sozusagen reziproker Steg genau umgekehrt verläuft, das heisst von der Seite der Ummantelung, wo der erste Steg aufhört, sich zu der Seite der Ummantelung erstreckt, wo der erste Steg anfängt. Eine solche Anordnung kann als ein Intervall betrachtet werden. Im nächsten Intervall würde dann der erste Steg von der Seite der Ummantelung, wo der zweite Steg im ersten Intervall angefangen hat, zur gegenüberliegenden Seite der Ummantelung erstrecken. Es können somit geometrische Muster innerhalb des Formkörpers periodisch wiederkehren. Das kleinste zu wiederholende Muster zur Herstellung eines Formkörpers mit bestimmten vordefinierten Durchströmungseigenschaften kann mathematisch ermittelt werden. Dieses ermittelte kleinstmögliche Muster kann innerhalb des Formkörpers wiederholt vorkommen.

Im Sinne der vorliegenden Erfindung kann als Intervall eine bestimmte Abfolge von Schichten innerhalb eines Formkörpers angesehen werden, insbesondere umfasst ein Intervall zwischen 2 und 50, insbesondere 2 und 20 Schichten. Solche Intervalls können auch parallel angeordnet sein, d. h. die Wiederholung des Intervalls findet nicht in Richtung einer Hauptströmungsrichtung, sondern radial dazu statt. Somit lässt sich aus einem Formkörper mit kleinstem Intervall eine beliebig grosse Struktur realisieren. Alternativ umfasst der Formkörper eine einmalige, sich nicht wiederholende innere Anordnung.

In einer besonderen Ausführungsform werden die Intervalle so ausgestaltet, dass die Ausrichtung der Stege in einem Winkel von im Wesentlichen 90° um die Strömungsrichtung gedreht wird. Somit kann eine Änderung der Richtung des Fluids bewerkstelligt werden. Ein besonderer Vorteil dieser Ausführungsform ist, dass die Geometrie der Formkörper so ausgestaltet ist, dass eine transversale Dispersion nicht von der lokalen Reynoldszahl der Durchströmung abhängt, sondern einfach proportional zur räumlich gemittelten Geschwindigkeit ist.

In einer besonderen Ausführungsform bildet die Gesamtheit der Aussparungen ein zusammenhängendes Volumen des Formkörpers, somit bildet die Gesamtheit der Aussparungen ein durchströmbares Innenvolumen des Formkörpers aus. Die Aussparungen mehrerer übereinander liegender Schichten können wie Kanäle entlang der Stege des Formkörpers im Inneren verlaufen. Somit kann ein Formkörper durch zahlreiche Richtungsänderungen eines Fluids, das ihn durchströmt, zu einer effizienten Durchmischung führen. Um zum Beispiel die durch die treppenförmigen Stege induzierte Konvektionsströmung in einer Richtung zu variieren, kann die Ausrichtung der Treppenstruktur von Zeit zu Zeit geändert, vorzugsweise gedreht werden. Dabei kann es sich um eine Drehung der Ausrichtung der treppenförmigen Stege um 90° um die Strömungsrichtung handeln. Bei einer periodischen Drehung um jeweils 90° ergeben sich zum Beispiel zwei Ausrichtungen der treppenförmigen Stege im Formkörper. Ein durchströmbares Innenvolumen ist dann gegeben, wenn die Gesamtheit der Ausnehmungen ein zusammenhängendes Innenvolumen ergeben. Es kann zum Beispiel ein zusammenhängendes Labyrinth im Inneren des Formkörpers bestehen, welches in Kanälen durchströmbar ist und durch die Stege begrenzt wird. Selbstredend würde es sich bei einem solchen exemplarischen Labyrinth um eines handeln, welches vorzugsweise keine Sackgassen aufweist, um Totzonen zu vermeiden.

In einer besonderen Ausführungsform verlaufen die Schichten parallel zur mindestens einen Strömungsrichtung. Alternativ verlaufen die Schichten senkrecht zur mindestens einen Strömungsrichtung.

In einer besonderen Ausführungsform umfasst die Ummantelung Ausnehmungen und/oder Lamellen und/oder Rippen. Diese Strukturen der Ummantelung können dazu dienen die Oberfläche zwecks Wärmetausch zu vergrössern, den Formkörper zu fixieren oder montieren oder als Zu- und Abflüsse für Zusatzstoffe. Rippenstrukturen an der Kanalaussenwand können integraler Bestandteil der jeweiligen Schicht sein. Ein Doppelmantel, der um den eigentlichen Formkörper angeordnet ist, kann ebenso direkt mit der Schichtstruktur verbunden sein. Alternativ weist die Ummantelung keine derartigen Strukturen auf. Die Strukturen können auch kombiniert werden. So kann die Ummantelung Ausnehmungen für Zu- und Abfuhrkanäle oder Befestigungen aufweisen und gleichzeitig eine Oberfläche mit Lamellen für den verbesserten Wärmeaustausch haben. Eine Ummantelung kann auch nur eine der genannten Strukturen aufweisen, so können sich zum Beispiel Rippen über die gesamte Oberfläche der Ummantelung parallel zur Querschnittsfläche des Formkörpers aus der Ummantelung erstrecken. Solche Rippen verleihen dem Formkörper Stabilität und vergrössern die Oberfläche der Ummantelung. Die Rippen können weiter mit Fortsätzen oder Zotten oder Verstrebungen ausgestattet sein, um die Oberfläche weiter zu vergrössern. Mit Verstrebungen kann zusätzlich die Stabilität verbessert werden. Solche Verstrebungen können sich zum Beispiel von Rippe zu Rippe erstrecken. Sind die Zwischenräume zwischen den Rippen komplett verstrebt, so kann dies bis zu einer doppelwandigen Ummantelung führen. Innerhalb der Doppelwand könnte dann ein weiteres Fluid zirkuliert werden. Im Sinne der vorliegenden Erfindung wird die Auflistung "und/oder" im Sinne einer kopulativen Konjunktion verwendet.

In einer besonderen Ausführungsform ist der Formkörper einstückig ausgestaltet. Durch die mit der Ummantelung fest verbundenen treppenförmigen Stege kann eine hohe strukturelle Festigkeit erzeugt werden. Dazu kann die Ummantelung verhältnismässig leicht gestaltet werden und es kann Material gespart werden. Alternativ ist der Formkörper mehrteilig ausgestaltet. In einer besonderen alternativen Ausführungsform umfasst der Formkörper eine separate Ummantelung oder Hülse, oder umfasst weitere Unterformkörper, so dass ein grösserer Block Formkörper besteht, welcher aus verschiedenen oder gleichen Unterformkörpern zusammengesetzt ist. In einer weiteren alternativen Ausführungsform umfasst der Formkörper eine separate Ummantelung, die mit dem restlichen Formkörper fest verbunden ist. So kann die Ummantelung zum Beispiel mit dem Formkörper verschweisst oder verklebt oder verschraubt sein.

Im Sinne der vorliegenden Erfindung ist einstückig also so zu verstehen, dass Formkörper und Ummantelung aus einem Stück, also integral, sind.

In einer besonderen Ausführungsform sind die Stege so ausgestaltet, dass sie in einem im Winkel zueinander gekreuzt sind, vorzugsweise in einem im Wesentlichen rechten Winkel. Ein erfindungsgemäss im Wesentlichen rechter Winkel kann ein Winkel mit einer Abweichung von 90° von zwischen ca. 1° und 15° sein.

In einer besonderen Ausführungsform umfasst der Formkörper mindestens einen periodischen Intervall aus zwischen 2 und 50, insbesondere 2 und 20 Schichten, insbesondere zwischen 2 und 15 Schichten, insbesondere zwischen 2 und 6 Schichten.

In einer besonderen Ausführungsform hat der Formkörper einen Querschnitt in einer Schnittebene, welche senkrecht zur Strömungsrichtung ist. In einer weiteren besonderen Ausführungsform ist die Schnittebene in einer flächenhaften Ausdehnung, welche aus zwei der Ausdehnungsachsen, vorzugsweise der Ausdehnung der X- und Y-Achsen besteht. In einer weiteren besonderen Ausführungsform ist der Querschnitt rechteckig, quadratisch oder rund. Bei quadratischen oder rechteckigen Strukturquerschnitten, lassen sich Treppenstege mit einer Ausrichtung parallel zu den Schnittebenen realisieren. Bei sehr vielen kurz aufeinander folgenden Treppenstufen ergibt sich eine beinahe, aber nicht vollständig glatte Stegoberfläche. Dies hat den Vorteil, dass ein Druckverlust bei einem durchströmenden Fluid verringert wird.

In einer bevorzugten Ausführungsform ist der Formkörper im Wesentlichen aus einem Material ausgewählt aus der Gruppe bestehend aus: Stahllegierungen, Metalle oder Metalllegierungen, Keramik, Glas, Kunststoffe oder andere Materialien.

In einer weiteren bevorzugten Ausführungsform ist die Oberfläche der Formkörpers, insbesondere die Oberfläche, welche das durchströmbare Innenvolumen begrenzt, beschichtet. Dabei können vor allem Beschichtungen zum Einsatz kommen, welche einen Temperaturaustausch verbessern, Antihaftbeschichtungen oder Beschichtungen, welche als Katalysator für die Fluide oder Bestandteile davon dienen können. In einer weiteren besonderen Ausführungsform kann die Oberfläche, welche das durchströmbare Innenvolumen begrenzt mit einer anderen funktionalen oder aktiven Schicht beschichtet sein, z. B. mit antibakteriellen Beschichtungen. Alternativ ist der Formkörper unbeschichtet.

In einer besonderen Ausführungsform umfasst der Formkörper eine Austrittsstelle und eine Eintrittstelle. In einer weiteren bevorzugten Ausführungsform weisen diese Stellen funktionale Strukturen auf, wie zum Beispiel Umlenkzonen, Druckaufbauzonen, Drucksenkungszonen oder besonders beschichtete, katalytische Zonen. In einer besonders bevorzugten Ausführungsform sind diese Stellen integraler Bestandteil des Formkörpers. In einer weiteren besonderen Ausführungsform umfasst der Formkörper eine Schicht paralleler Kanäle an einer oder beiden der oben genannten Stellen, wobei die Kanäle zum Beispiel runde, elliptische, wabenförmige, rechteckige, quadratische oder polygonale Querschnitte aufweisen können.

In einer besonderen Ausführungsform ist der erfindungsgemässe Formkörper durch ein Verfahren, welches die folgenden Schritte umfasst. erhältlich. Eine plastisch verformbare Masse wird durch eine Schablone zu einer ersten Schicht aufgetragen, wobei die Schablone Ausnehmungen aufweist, durch welche die plastisch verformbare Masse auf ein Trägermedium gelangt. Wahlweise wird die erste Schicht anschliessend gehärtet. Auf die erste Schicht wird anschliessend eine Anzahl folgender Schichten durch jeweils eine Schablone auf diese erste Schicht aufgetragen, wobei die folgenden Schichten wahlweise vor Auftragen der nächsten Schicht gehärtet werden können. Die Schablonen sind dabei so ausgestaltet, dass die folgende Schicht mindestens eine Verbundfläche wie oben aufgeführt mit der vorangegangenen Schicht aufweist, so dass insgesamt eine treppenförmige Struktur entsteht. Vorzugsweise werden zwischen zwei und fünfzig, besonders bevorzugt zwanzig Schichten aufgetragen. Jede Schicht wird durch eine passende, zugehörige Schablone aufgetragen. Bei dickeren Schichten können wiederholte einzelne Lagen durch dieselbe Schablone aufgetragen werden, welche, allenfalls zwischenzeitlich gehärtet, schliesslich eine Schicht bilden. Das Härten der plastisch verformbaren Masse kann einen Trocknungsschritt umfassen, alternativ kann es auch einen UV-Härtungsschritt, eine chemischer Härtungsschritt oder einen anderweitig induzierten Härtungsschritt umfassen. Der erhaltene Formkörper kann abschliessend verfestigt werden, insbesondere kann der erhaltene Formkörper durch Erwärmung verfestigt werden, insbesondere versintert werden.

Im Sinne der vorliegenden Erfindung kann eine Schablone als Sieb oder Maske ausgestaltet sein, welche Ausnehmungen umfasst die einer Topographie einer Schicht des Formkörpers entsprechen.

In einer besonderen Ausführungsform ist der Formkörper so ausgestaltet, dass er sich mittels eines Massenfertigungsverfahrens fertigen lässt. Insbesondere ist die Struktur des Formkörpers so ausgestaltet, dass er aus einer grossen Zahl an zweidimensionalen Schichten zu einem dreidimensionalen Formkörper aufgebaut werden kann, wobei bevorzugt die beteiligten zweidimensionalen Schichten sich in Ihrer Geometrie wiederholen und möglichst wenige unterschiedliche zweidimensionale Profile aufweisen sollen. Ein Profil kann zum Beispiel zur Herstellung einer Schicht dienen. Mehrere Lagen können durch ein Profil aufgetragen werden und bilden gemeinsam die besagte Schicht. Ein solches Profil kann als Schablone für ein erfindungsgemässes Herstellungsverfahren verwendet werden, wie im weiteren Verlauf der Erfindungsbeschreibung geschildert.

Ein weiterer Aspekt der vorliegenden Erfindung betrifft einen Reaktor, der mindestens einen der erfindungsgemässen Formkörper umfasst. Der Reaktor kann dazu verwendet werden eine Vielzahl von chemischen oder physikalischen Reaktionen an einem Fluid durchzuführen. Insbesondere handelt es sich beim erfindungsgemässen Reaktor um einen Reaktor zur Vermischung, z. B. als statischer Mischer, zum Wärmetausch, zur Emulgierung, zur Schäumung, zur Durchführung von katalysierten chemischen Reaktionen, zur Dekontamination, zur Vaporisation, zur Kondensation, zur Ausfällung von Stoffen, Substanzen oder Bestandteilen. Der Formkörper trägt auch zur Festigkeit des Reaktors bei, wenn, wie in einer besonderen Ausführungsform, die Wand direkt mit dem Formkörper verbunden erzeugt wird. Reaktoren, die derartige Formkörper mit integrierten Wänden einsetzen, können auch bei relativ hohen Drücken betrieben werden, ohne dass dazu sehr dicke Wände eingesetzt werden müssten. Dadurch, dass dieselbe Formkörper-Struktur in Reaktoren mit unterschiedlichen Durchmessern verwendet werden kann, lässt sich, zusammen mit geeigneten Vorverteilern, durch derartige Formkörper praktisch derselbe Prozess im Labormassstab wie auch im industriellen Massstab realisieren und der Scale-Up ist in vielen Fällen relativ einfach durchzuführen.

In einer besonderen Ausführungsform umfasst der Reaktor Formkörper zusammen mit geeigneten Verteilern, die zum Beispiel kleine Additiv - Fluidströme in Teilströme aufteilen, die dann an verschiedenen gleichmässig über dem Formkörper verteilten Punkten einer Hauptströmung zudosiert werden. Dadurch kann die Mischstrecke und auch die Mischzeit wesentlich reduziert werden.

Ein weiterer Aspekt der vorliegenden Erfindung betrifft die Verwendung eines erfindungsgemässen Formkörpers, insbesondere eines Formkörpers, der in mindestens einer Strömungsrichtung von einem Fluid durchströmbar ist. Insbesondere betrifft die vorliegende Erfindung die Verwendung eines erfindungsgemässen Formkörpers zur Vermischung, z. B. als statischer Mischer, zum Wärmetausch, zur Emulgierung, zur Schäumung, zur Durchführung von katalysierten chemischen Reaktionen, zur Dekontamination, zur Vaporisation, zur Kondensation, zur Ausfällung oder zur Diffusion von Stoffen, Substanzen oder Bestandteilen. Die speziell ausgelegte Form der treppenförmigen Stege kann eine intensive Durchmischung der Strömung quer zur Hauptströmung induzieren. Diese Durchmischung kann auch bei sehr kleinen lokalen Reynoldszahlen auftreten, bei denen Strömungen durch zufällige Porensysteme, wie sie in offenporigen Metallschäumen vorliegen, nur noch sehr beschränktes Durchmischungsverhalten quer zur Hauptströmung aufweisen. Gleichzeitig kann der Strömung eine sehr grosse innere Oberfläche zur Verfügung gestellt werden. Dadurch ist ein sehr effizienter Wärmeaustausch zwischen dem Formkörper und der Strömung möglich. Im Innern des Formkörpers kann die Wärme dann zudem effizient abgeleitet werden. Da der Formkörper mit einer Wandung oder Ummantelung direkt metallisch verbunden gebaut werden kann, kann die Wärme auch effizient durch die Wände abgeführt werden. Gleichzeitig ist auch der konvektive Wärmetransport durch die Strömung wegen des intensiven Queraustausches effizient.

In einer besonderen Ausführungsform wird der Formkörper zur Vermischung mehrerer Fluidströme verwendet.

In einer besonderen Ausführungsform wird der Formkörper zur Erwärmung oder Abkühlung von Fluidströmen mittels Wärmeab- oder -zufuhr durch eine Ummantelung oder mittels Mischung mehrerer Ströme mit unterschiedlichen Temperaturen verwendet.

In einer besonderen Ausführungsform wird der Formkörper zur Erzeugung grosser definierter Oberflächen in Mehrphasenströmungen durch Erzeugung von Tropfen mit definierten, engen Tropfengrössenspektren bei Systemen mit mehreren unmischbaren Flüssigkeiten oder Blasen bei Gas-Flüssig Gemischen verwendet.

In einer besonderen Ausführungsform wird der Formkörper zur Emulgierung von Systemen mit mehreren unmischbaren Flüssigkeiten zu stabilen Emulsionen mit sehr kleinen Tropfen im Mikrometerbereich verwendet.

In einer besonderen Ausführungsform wird der Formkörper zur die Erzeugung von stabilen Schäumen aus Gas-Flüssig Mischungen verwendet.

In einer besonderen Ausführungsform wird der Formkörper zur kontrollierten Durchführung von homogenen chemischen Reaktionen mit gleichzeitiger intensiver Vermischung der reagierenden Ströme und Wärmezu- oder -abfuhr verwendet.

In einer besonderen Ausführungsform wird der Formkörper zur Durchführung chemischer Reaktionen mit heterogener Katalyse durch Katalysatoren, die in den Formkörper integriert oder mit denen die Formkörper beschichtet sind, verwendet. Die relativ grosse Oberfläche des durchströmbaren Innenvolumens der erfindungsgemässen Formkörper hilft auch, heterogene chemische Reaktionen mit Katalysatoren auf den Oberflächen zu beschleunigen. Gleichzeitig kann die intensive Vermischung der Strömung im Innern des Formkörpers die Bildung von "Hotspots" oder Strömungs- Maldistributionen verhindern.

In einer besonderen Ausführungsform wird der Formkörper zur Dekontaminierung von mit Bakterien belasteten Fluiden durch Kontakt mit antibakteriellen Beschichtungen an der Oberfläche der Formkörper verwendet. Bei dieser Anwendung der Formkörper zur Dekontamination bakteriell belasteter Fluidströme ist die Kombination aus sehr grosser Oberfläche zur Kontaktierung der Bakterien mit einer antibakteriellen Beschichtung sowie die gleichzeitige intensive Durchmischung der Strömung, die dazu führt, dass der gesamte Fluidstrom intensiv und wiederholt mit den antibakteriellen Oberflächen in Kontakt kommt, von Vorteil.

In einer besonderen Ausführungsform wird der Formkörper zur Verdampfung einer Flüssigkeit auf der Oberfläche des Formkörpers durch Wärmeeintrag in den Formkörper oder durch Kontakt mit einem heissen Gas, das durch den Formkörper strömt, verwendet.

In einer besonderen Ausführungsform wird der Formkörper zur Kondensation eines Gases an der Oberfläche der Formkörper durch Wärmeabfuhr durch die Formkörper verwendet.

In einer besonderen Ausführungsform wird der Formkörper zur Ausfällung durch Kristallisation beim Durchströmen der Formkörper durch genau kontrollierte Kühlung verwendet.

In einer besonderen Ausführungsform wird der Formkörper zum Stoffaustausch zwischen einem Gasstrom und einer Flüssigkeit, die gemeinsam die Formkörper durchströmen, verwendet.

Ein weiterer Aspekt der vorliegenden Erfindung betrifft ein Verfahren zur Herstellung eines erfindungsgemässen Formkörpers. Zur Durchführung des Verfahrens zur Herstellung eines Formkörpers, insbesondere eines Formkörpers wie oben beschrieben, wird eine Schablone mit Ausnehmungen bereitgestellt. Eine plastisch verformbare Masse wird durch die Schablone zu einer ersten Schicht aufgetragen, wobei die plastisch verformbare Masse durch die Ausnehmungen der Schablone auf ein Trägermedium gelangt. Eine zweite Schablone wird bereitgestellt. Eine folgende Schicht der plastisch verformbaren Masse wird durch die zweite Schablone auf die erste Schicht aufgetragen. Die zweite Schablone ist derart ausgestaltet, dass die folgende Schicht mindestens eine Verbundfläche mit der vorangegangenen Schicht aufweist.

Das Auftragen einer folgenden Schicht wird so lange wiederholt, bis die gewünschte Anzahl Schichten erreicht wird. Für jede Schicht wird eine passende, zugehörige Schablone bereitgestellt. Jede Schicht wird durch die passende Schicht aufgetragen.

Der Formkörper wird abschliessend verfestigt, insbesondere durch Erwärmung, insbesondere durch Versinterung.

In einer besonderen Ausführungsform wird die erste Schicht nach dem Auftragen gehärtet. Insbesondere werden auch die folgenden Schichten vor Auftragen einer allfälligen nächsten Schicht gehärtet. Bevorzugt umfasst die Härtung einen Trocknungsschritt. Denkbar wäre auch ein Härtungsschritt welcher unter anderem auch eine chemisch induzierte Härtungsreaktion, eine UV oder anderweitig Strahleninduzierte Härtungsreaktion umfasst.

In einer besonderen Ausführungsform werden zwischen zwei und zwanzig Schichten aufgetragen, insbesondere werden zwischen zwei und fünfzehn Schichten aufgetragen, insbesondere zwischen drei und zehn Schichten aufgetragen. Bei den angegeben Schichtenzahlen handelt es sich um die Anzahl einzigartiger, das heisst unterschiedlicher Schichten. In einem fertigen erfindungsgemässen Formkörper kann eine Wiederholung dieses Verfahrensschrittes zu einer Anzahl periodisch wiederkehrender Intervalle führen.

In einer besonderen Ausführungsform wird zusätzlich zu den Schichten eine Ummantelung aus dem plastisch verformbarem Material aufgetragen. Die Ummantelung kann simultan aufgetragen werden. Die Schablonen können insbesondere so ausgestaltet sein, dass sie Aussparungen für eine Ummantelung aufweisen. In einer weiteren besonderen Ausführungsform sind die Schablonen so ausgestaltet, dass allfällige Strukturen an der Ummantelung, wie zum Beispiel Rippen, Lamellen, Stege oder Öffnungen, ebenfalls simultan aufgetragen werden können. Somit kann mit jeder Schicht eine entsprechende Ummantelung oder eine Ummantelung mit Struktur mit aufgetragen werden. Dies reduziert die erforderlichen Arbeitsschritte und macht das Verfahren besonders effizient. Ausserdem wird es dadurch möglich, den Formkörper einstückig auszubilden. Durch das beschriebene Herstellverfahren lassen sich zusätzlich auch Wände, Rippen und Montagevorrichtungen wie Bohrungen oder Schlitze direkt in den Formkörper integrieren, wodurch eine sehr wirtschaftliche Serienfertigung möglich wird.

In einer besonderen Ausführungsform werden wiederholte einzelne Lagen durch dieselbe Schablone aufgetragen, welche schliesslich eine einzelne Schicht bilden.

In einer besonderen Ausführungsform wird der Formkörper im Sinterofen verfestigt. Dabei wird in einem ersten Schritt bei etwas niedrigerer Temperatur von typischerweise etwa 600°C Binder verdampft. Danach wird bei erhöhten Temperaturen der Formkörper versintert. Die Temperaturen bleiben dabei immer unterhalb der Schmelztemperatur, aber hoch genug, dass sich Partikel in der plastisch verformbaren Masse durch Diffusionsprozesse fest verbinden. Typischerweise bewegt sich die Sintertemperatur zwischen 1000 - 1200°C für Stahlmischungen, wobei für Keramiken Temperaturen von 1800 - 2500 °C verwendet werden können. Die Versinterungsbedingungen sind Materialabhängig und im Ermessen eines Fachmanns.

Als plastisch verformbare Masse können insbesondere Suspensionen verwendet werden, deren Hauptbestandteil feinkörniges Pulver des einzusetzenden Werkstoffes sein kann. Eine Vielzahl von Werkstoffen kann verwendet werden, insbesondere geeignet sind Metalle, Metalllegierungen, Edelstahl oder Edelmetalle sowie Keramiken und/oder Glaskeramiken. Die verwendeten Pulver haben typischerweise sehr kleine Korngrössen von etwa 10 Mikrometer. Zur Bildung eines plastisch verformbaren Werkstoffs werden insbesondere organische Binder zugegeben. Materialien, die z. B. als organische Binder verwendet werden können, sind unter anderen CMC (Carboxymethylcellulose), Polyeolefin sowie verschiedene Formen natürlicher Stärke (Maismehl, Weizenmehl, Kartoffelmehl, Reismehl, etc.). Falls die Pulver wasserverträglich sind, kann eine wässrige Suspension mit dem zu verarbeitenden Pulver und den organischen Bindern generiert werden. Falls die verwendeten Pulver wasserunverträglich sind, können Lösemittel anstelle des Wassers verwendet werden.

In einer besonderen Ausführungsform wird mehr als ein Material als plastisch verformbare Masse verwendet. Ein derart hergestellter Formkörper umfasst einen Verbund aus mindestens zwei Materialien und ist einstückig ausgebildet, da die aus verschiedenen plastisch verformbaren Massen hergestellten Strukturen formschlüssig aneinander gebunden sind. Mit diesem Verfahren lässt sich unter anderem ein Komposit-Formkörper mit unterschiedlichen katalytischen Zonen herstellen. Zum Beispiel lässt sich mit einer ersten plastisch verformbaren Masse eine stabile Tragstruktur bilden, während mit einer zweiten plastisch verformbaren Masse eine katalytisch aktive Oberflächenstruktur gebildet werden kann. Alternativ lassen sich nachträglich auslösbare Stützstrukturen bilden, welche nach der Härtung, respektive Versinterung einer ersten plastisch verformbaren Masse herausgelöst oder anderweitig entfernt werden können, so dass eine anders zu filigran oder unstabil herzustellende Struktur (z.B. eine Struktur, bei denen die einzelnen aufeinanderfolgenden Schichten nur Kantenkontakt miteinander haben) sicher herstellbar ist.

Sämtliche besondere Ausführungsformen lassen sich im Rahmen der vorliegenden Erfindung beliebig kombinieren.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: eine mögliche Grundstruktur mit sechs Schichten eines erfindungsgemässen Formkörpers;
- Fig. 2: einen erfindungsgemässen Formkörper;
- Fig. 3: eine weitere Ausführungsform eines erfindungsgemässen Formkörpers mit einer grossen Oberfläche und einem Rechteckigen Profil;
- Fig. 4: eine weitere Ausführungsform eines erfindungsgemässen Formkörpers mit einem runden Profil ;
- Fig. 5: eine weitere Ausführungsform eines erfindungsgemässen Formkörpers mit verschiedener Ausrichtung der Schichten in Bezug zur Hauptströmungsachse;
- Fig. 6: eine weitere Ausführungsform eines erfindungsgemässen Formkörpers mit Ummantelung und rundem Profil;
- Fig. 7: eine weitere Ausführungsform eines erfindungsgemässen Formkörpers mit Ummantelung und quadratischem Profil;
- Fig. 8a: eine weitere Ausführungsform eines erfindungsgemässen Formkörpers mit Ummantelung und Lamellen;
- Fig. 8b: eine weitere Ausführungsform eines erfindungsgemässen Formkörpers mit Ummantelung und Rippenstrukturen;
- Fig. 8c: eine weitere Ausführungsform eines erfindungsgemässen Formkörpers mit einer Doppelummantelung und rechteckigem Profil;
- Fig. 8d: eine weitere Ausführungsform eines erfindungsgemässen Formkörpers mit einer Doppelummantelung und rundem Profil;
- Fig. 9: eine weitere Ausführungsform eines erfindungsgemässen Formkörpers mit verschiedener Ausrichtung der Schichten in Bezug zur Hauptströmungsachse und einer funktionalen Zone;
- Fig. 10: eine Strömungssimulation durch eine 3D Struktur gemäss der Erfindung, und
- Fig. 11: zeigt einen Modellablauf des erfindungsgemässen Verfahrens;
- Fig. 12a: zeigt eine Schablone wie sie zur Ausführung des erfindungsgemässen Verfahrens verwendet werden kann;
- Fig. 12b: zeigt eine Schablone, welche zur Auftragung einer folgenden, zweiten Schicht auf die Schablone der Fig. 12 a verwendet werden kann;

Grundsätzlich sind in den Figuren gleiche Teile mit gleichen Bezugszeichen versehen.

### Wege zur Ausführung der Erfindung

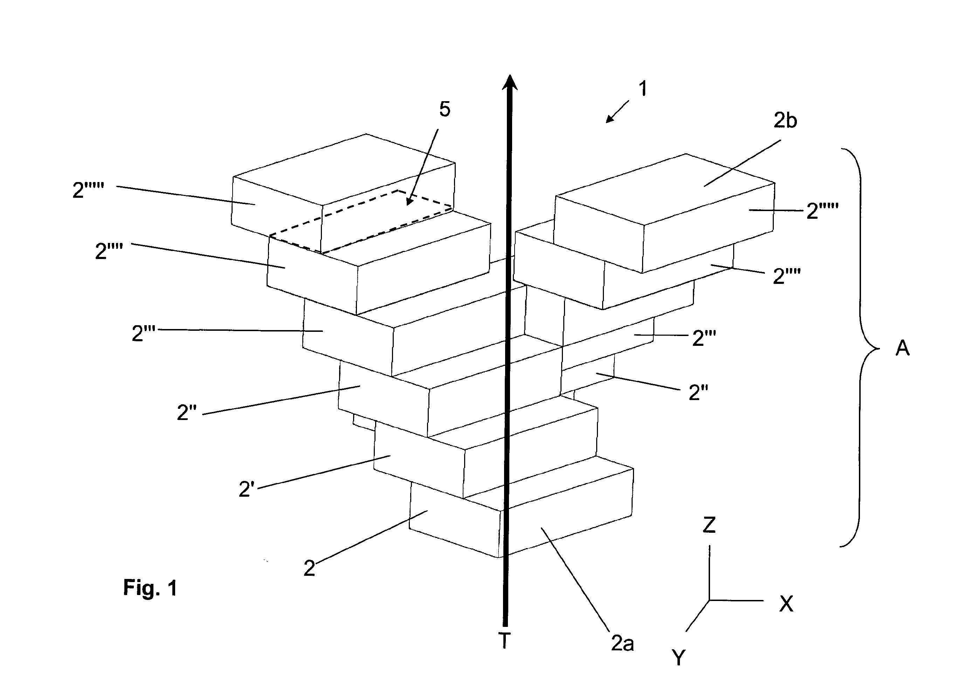

**Fig. 1** ist eine schematische Darstellung einer einfachen Grundstruktur eines Formkörpers 1 gemäss der vorliegenden Erfindung. Der Formkörper 1 hat zwei Stege 2a, 2b. Der erste Steg 2a verläuft von rechts unten nach links oben, während der zweite Steg 2b von links unten nach rechts oben verläuft und in der Ebene hinter dem ersten Steg 2a angeordnet ist. Die generelle Strömungsrichtung T verläuft von unten nach oben. Die Einteilung unten/oben wurde willkürlich gewählt, dient nur der Erläuterung der Figur und steht nicht in einem funktionalen Zusammenhang zum Formkörper. Die generelle Strömungsrichtung T gibt an, dass ein Fluid, welches den Formkörper 1 durchströmt im vorliegenden Beispiel am unteren Ende, dem Eintrittsende 10 des Formkörpers 1 einen ersten Kontakt mit dem Formkörper 1 hat, und am oberen Ende des Formkörpers 1 am Austrittsende 11, diesen wieder verlässt. Die Stege 2a, 2b werden durch eine Vielzahl von Schichten 2, 2', 2", 2"', 2"", 2""' gebildet, welche den Stegen 2a, 2b eine insgesamt treppenförmige Struktur geben. Dabei wird eine erste Schicht 2 von einer zweiten Schicht 2' teilweise überlappt, welche wiederum von einer dritten Schicht 2" teilweise überlappt wird. Der Grad an Überlappung, d. h. zum Beispiel der Flächenanteil einer Treppenstufe der ersten Schicht 2 der stoffschlüssig ist mit dem Flächenanteil der zweiten Schicht 2', ist im vorliegenden Beispiel im ganzen Formkörper 1 konstant. Die einzelnen Schichten 2, 2', 2", 2"', 2"", 2""' bilden sowohl die Treppenstufen des ersten Stegs 2a wie auch des zweiten Stegs 2b. Im vorliegenden Beispiel liegt der Grad an Überlappung bei ca. 50 %, d.h. 50 % der Oberfläche einer Schicht welche Senkrecht zur Hauptströmungsrichtung steht, befindet sich in stoffschlüssigen Kontakt mit einer benachbarten Schicht. Im vorliegenden Beispiel entspricht zudem die Dicke der Schicht, d.h. die Flächen die parallel zur Hauptströmungsrichtung T liegen, der freibleibenden, nicht von der nachfolgenden Schicht überlappten Fläche. Die jeweils überlappenden Flächenanteile einer Schicht bilden eine Verbundfläche 5. Die Verbundfläche 5 ist im fertigen Formkörper 1 stoffschlüssig verbunden.

Am Beispiel der Schicht 2"" der Stege 2a, 2b erläutert heisst dies, dass beide Treppenstufen, welche in der Schicht 2"" oder Flächenausdehnung der Ausdehnungsachsen X, Y liegen, eine gemeinsame Schicht bilden. Zwischen den Treppenstufen der Stege 2a, 2b in der Schicht 2"" sind Aussparungen 12. Die beispielhaft gezeigten Stege 2a, 2b verlaufen gegenseitig zueinander und kreuzen sich bei einem Winkel von 90°, berechnet von einer jeweiligen gedachten Mittelachse durch alle Kanten der Treppen eines Stegs 2a, 2b.

Der in Fig. 1 gezeigte Formkörper 1 kann auch als Vielfaches hergestellt werden, wobei ein grösserer Formkörper 1 mit mehr Stegen 2a, 2b erzeugt wird. Ein solches Element kann zum Beispiel als Intervall A beliebig wiederholt werden, auch in anderer Grundausrichtung, um so einen grösseren Formkörper 1 zu erzeugen.

Die Schichtdicken der in der Fig. 1 exemplarisch gezeigten Schichten 2, 2', 2", 2"', 2"", 2""' können sich zwischen 30 µm und 10 mm bewegen. Das vorliegende Beispiel hat Schichtdicken der Schichten 2, 2', 2", 2"', 2"", 2'"" von 500 µm.

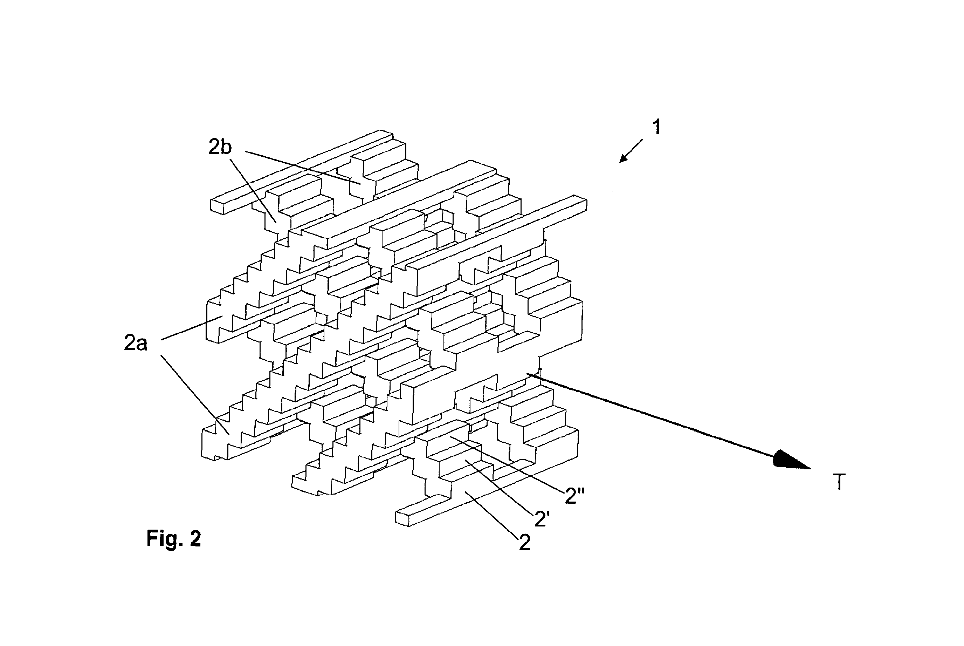

Ein solcher grösserer Formkörper 1 ist zum Beispiel in **Fig. 2** gezeigt. Dieser Formkörper 1 kann zum Beispiel aus Silber in einem analogen Verfahren wie bei Fig. 1 geschildert hergestellt sein. Der Formkörper 1 hat eine 3D Struktur mit gekreuzten, treppenförmigen Stegen 2a, 2b, wobei die Schichten 2, 2', 2", senkrecht zur Hauptströmungsrichtung T ausgerichtet sind. Durch die guten thermischen Eigenschaften von Silber und der grossen Oberfläche durch die Stege 2a, 2b, kann der in Fig. 2 gezeigte Formkörper ideal als Wärmetauscher eingesetzt werden. Insgesamt werden drei Stege 2a und drei Stege 2b kreuzweise im Formkörper 1 zueinander angeordnet. Die einzelnen Stege 2a, 2b verfügen je nach ihrer Ausdehnung über eine unterschiedliche Anzahl an Treppenstufen, aber insgesamt hat der Formkörper 1 fünfzehn Schichten 2, 2',2".

Der in Fig. 2 gezeigte Formkörper 1 kann beispielsweise Aussenabmessungen von zwischen 1 und 10 mm aufweisen.

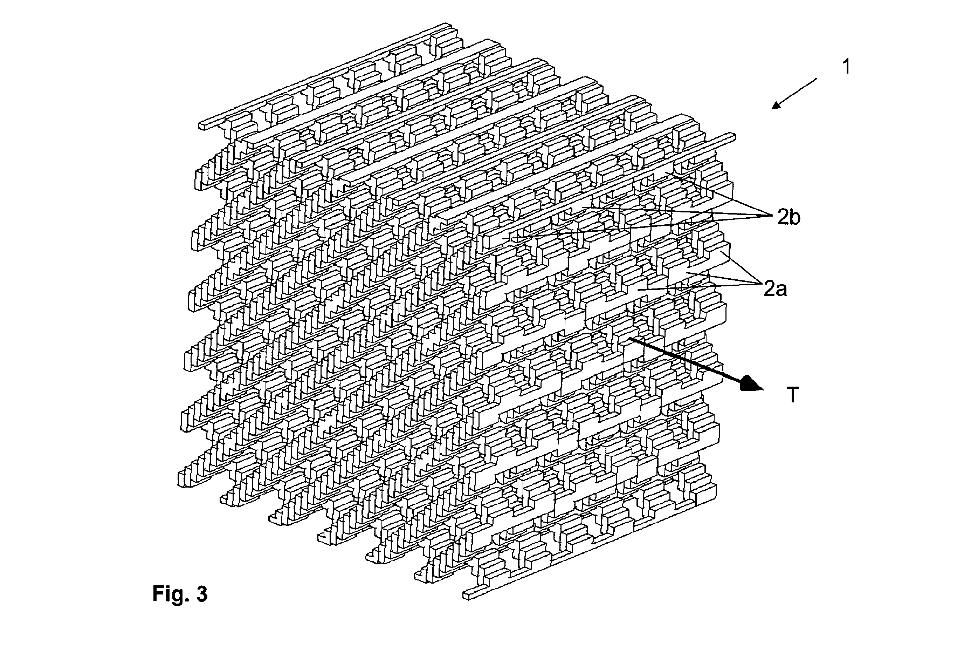

Am Beispiel der **Fig. 3** ist ein grösserer Block mit quadratischem Grundriss der 3D Struktur mit gekreuzten, treppenförmigen Stegen 2a, 2b gezeigt. Die Schichten sind auch hier senkrecht zur Hauptströmungsrichtung T ausgerichtet. Dieser Block verfügt über eine in Relation zum Volumen besonders grosse Oberfläche. Somit wäre dieser erfindungsgemässe Block besonders geeignet als Reaktor. Im vorliegenden Beispiel könnte der Formkörper 1 mit einem katalytisch aktivem Überzug versehen sein. Durch die grosse Oberfläche kann ein Katalysator optimal mit einem Fluid im Innenvolumen des Formkörpers 1 reagieren.

Der in Fig. 3 gezeigte Formkörper 1 kann beispielsweise Aussenabmessungen von zwischen 3 und 30 mm aufweisen.

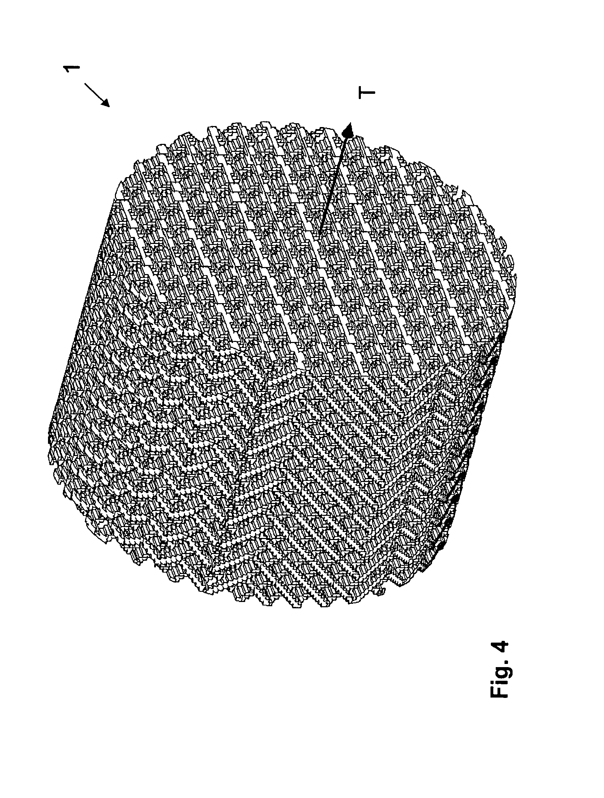

Die **Fig. 4** zeigt ein Beispiel eines grösseren Blockes mit rundem Grundriss. Die Schichten sind senkrecht zur Hauptströmungsrichtung T ausgerichtet. Der runde Grundriss kann auf verschiedenem Wege zu Stande kommen. Zum Beispiel kann ein Formkörper 1 wie in Fig. 3 gezeigt mit einem rechteckigen Querschnitt in eine beliebige, so auch runde Form gefräst oder geschnitten werden. Der runde Querschnitt kann aber auch von Beginn weg in der Herstellung des Formkörpers vorgesehen sein, indem die äusseren Ränder der Schichten jeweils abgerundet sind. Die Schichten verlaufen in diesem Formkörper senkrecht zur Hauptströmungsrichtung T, während die Stege in einem 45 Grad Winkel zur Hauptströmungsrichtung verlaufen.

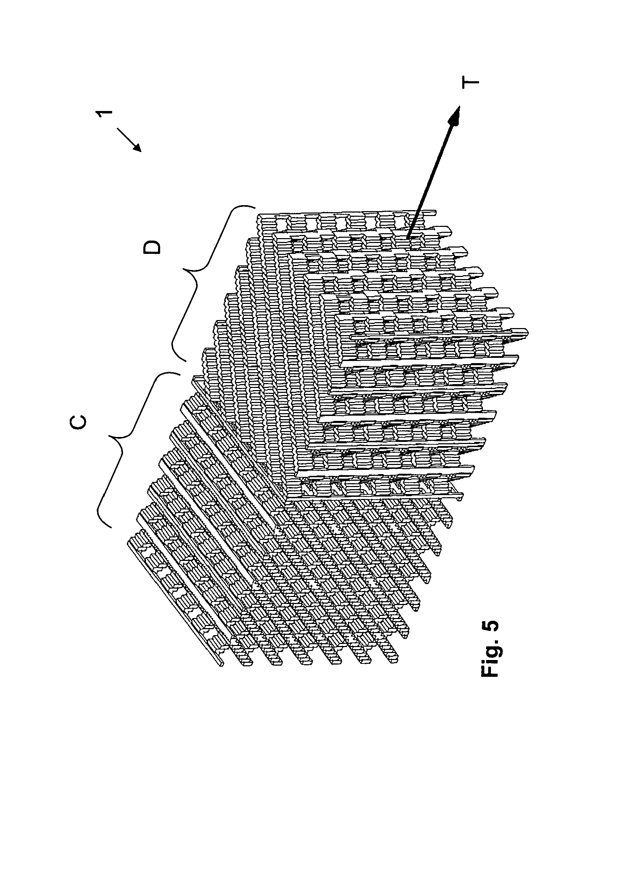

Am Beispiel der **Fig. 5** ist ebenfalls ein grösserer Block der 3D Struktur mit quadratischem Grundriss und mit gekreuzten, treppenförmigen Stegen 2a, 2b gezeigt, wobei die Schichten 3 senkrecht zur Hauptströmungsrichtung 1 ausgerichtet sind. Der Block weist im Gegensatz zu den vorangegangen Beispielen zwei Bereiche C, D auf, in denen die treppenförmigen Stege unterschiedlich ausgerichtet sind. Die Ausrichtung der Stege in diesen beiden Bereichen sind relativ zueinander um 90° um die Hauptströmungsrichtung T verdreht. Durch diese Verdrehung lässt sich eine noch bessere Durchmischung erreichen.

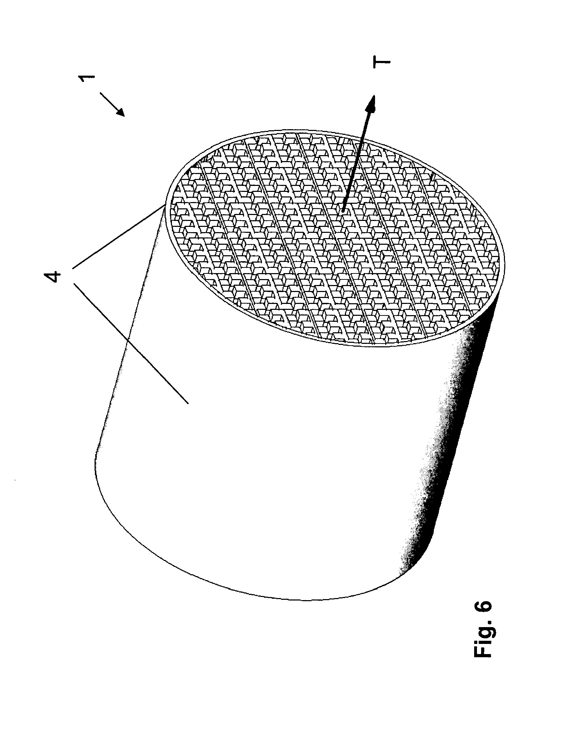

**Fig. 6** zeigt ein Beispiel eines grösseren Blockes eines Formkörpers 1 mit einem runden Grundriss, ebenfalls mit gekreuzten, treppenförmigen Stegen 2a, 2b. Die Schichten sind senkrecht zur Hauptströmungsrichtung T ausgerichtet. Der Block kann im Inneren mehrere Bereiche aufweisen, in denen die treppenförmigen Stege unterschiedlich ausgerichtet sind, analog wie in Figur 5, wo zum Beispiel die Ausrichtung der Stege relativ zu einander um 90 Grad um die Hauptströmungsrichtung T verdreht sein kann. Der Formkörper ist an seinem Umfang durch eine Ummantelung 4 begrenzt. Die Ummantelung 4 ist in diesem konkreten Beispiel ein integraler Bestandteil des Formkörpers 1, d. h. der Formkörper 1 mit Ummantelung ist einstückig ausgebildet.

Auch dieser Formkörper kann mit geringfügigen Anpassungen mit dem oben geschilderten Verfahren für den in Fig. 1 gezeigten Formkörper 1 hergestellt werden. Die Schablone ist so ausgestaltet, dass sie den gleichen runden Querschnitt hat wie der Formkörper 1 und auf dem Umfang eine Ausnehmung hat, die der Ummantelung 4 entspricht. Somit kann der gesamte Formkörper 1 in einem Verfahren hergestellt werden. Der in Fig. 4 beispielhaft gezeigte Formkörper 1 besteht mitsamt Ummantelung aus Silikon-Karbid Keramik.

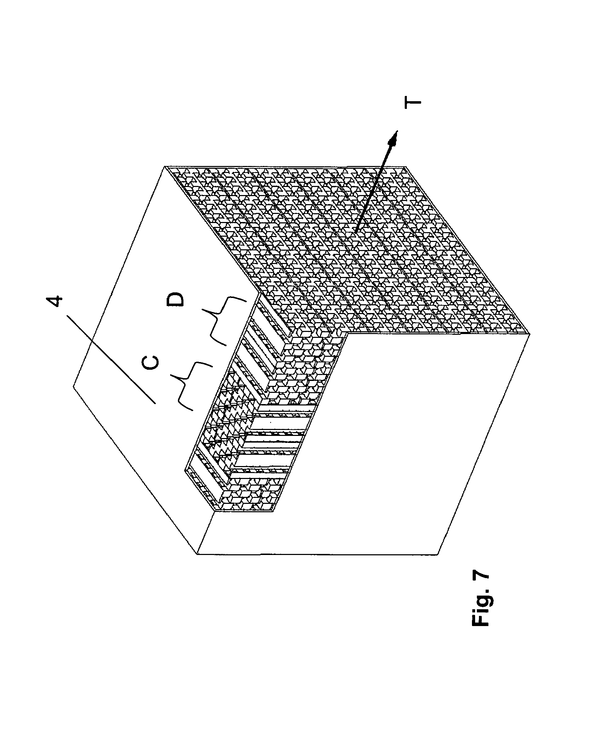

Am Beispiel der **Fig. 7** ist ein grösserer Formkörper mit quadratischem Grundriss und gekreuzten, treppenförmigen Stegen gezeigt. Die Schichten sind senkrecht zur Hauptströmungsrichtung T ausgerichtet. Der Block enthält mehrere Bereiche C, D, in denen die treppenförmigen Stege unterschiedlich ausgerichtet sind. Zur Illustration wurde die Ummantelung 4 des Formkörpers 1 an einer Kante aufgeschnitten und entfernt. Die Ausrichtung der Stege in den beiden Bereichen C, D ist relativ zueinander um 90° um die Hauptströmungsrichtung T verdreht.

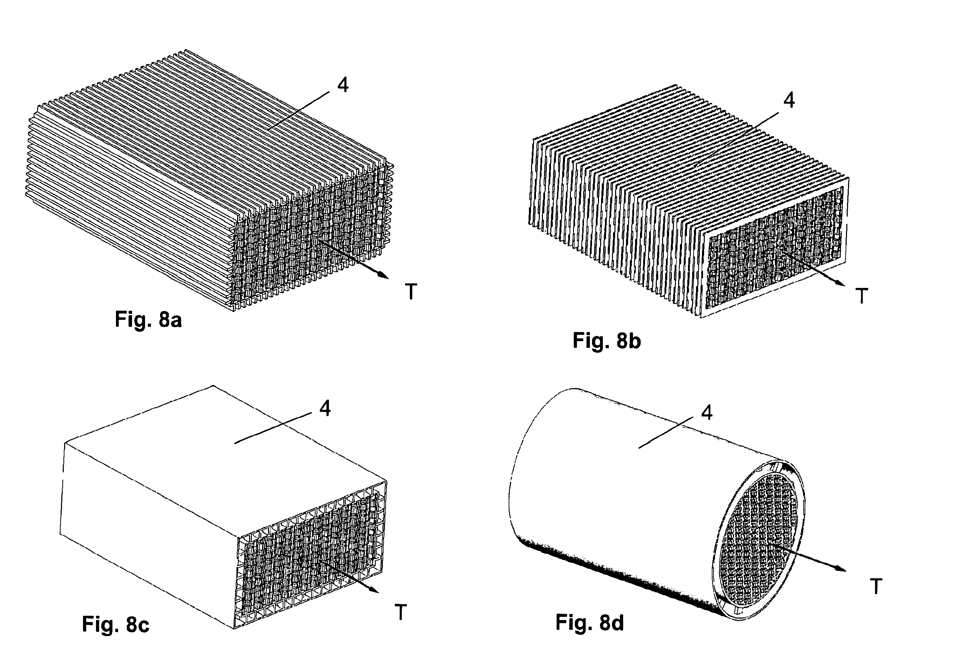

Die **Fig. 8a, 8b, 8c, 8d** zeigen alternative Formkörper mit rechteckigem Grundriss mit gekreuzten, treppenförmigen Stegen und Schichten die parallel zur Hauptströmungsrichtung T ausgerichtet sind. Diese Ausführungsformen zeigen verschiedene Strukturen der Ummantelung 4, welche analog wie bei Fig. 6 integrale Bestandteile der Ummantelung 4 und letztlich des Formkörpers sind. Fig. 8a zeigt Lamellen, welche parallel zur Hauptströmungsrichtung T verlaufen. Solche Lamellen sind insbesondere für Wärmetauscher für einen besseren Temperaturaustausch wichtig. Fig. 8b zeigt Rippenstrukturen auf der Ummantelung 4. Fig. 8c zeigt eine Doppelummantelung 4, welche mittels Verstrebungen eine Hohlraumummantelung 4 bildet. Fig. 8d zeigt einen Doppelmantel 4 auf einem Formkörper 1 mit rundem Querschnitt. Besonders Doppelmantel 4 kann eine verbesserte Isolation des Formkörpers 1 bewirken.

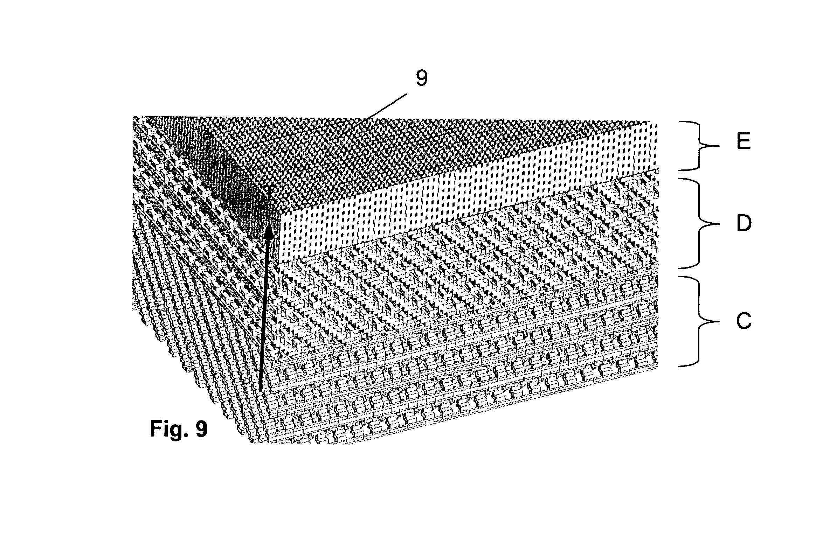

An **Fig. 9** ist ein Beispiel eines Formkörpers 1 mit rechteckigem Grundriss mit gekreuzten, treppenförmigen Stegen und senkrecht zur Hauptströmungsrichtung 1 ausgerichteten Schichten ausschnittsweise gezeigt. Der Block enthält zwei Bereiche C, D, in denen die treppenförmigen Stege unterschiedlich ausgerichtet sind, wobei die Ausrichtung der Stege in diesen beiden Bereichen relativ zu einander um 90° um die Hauptströmungsrichtung T verdreht ist. Am Austritt ist zusätzlich ein Block E mit parallel liegenden Kanälen zur Gleichrichtung der Strömung angebracht. Auch diese Kanäle können, wie oben geschildert, integral mit dem Formkörper 1 hergestellt werden.

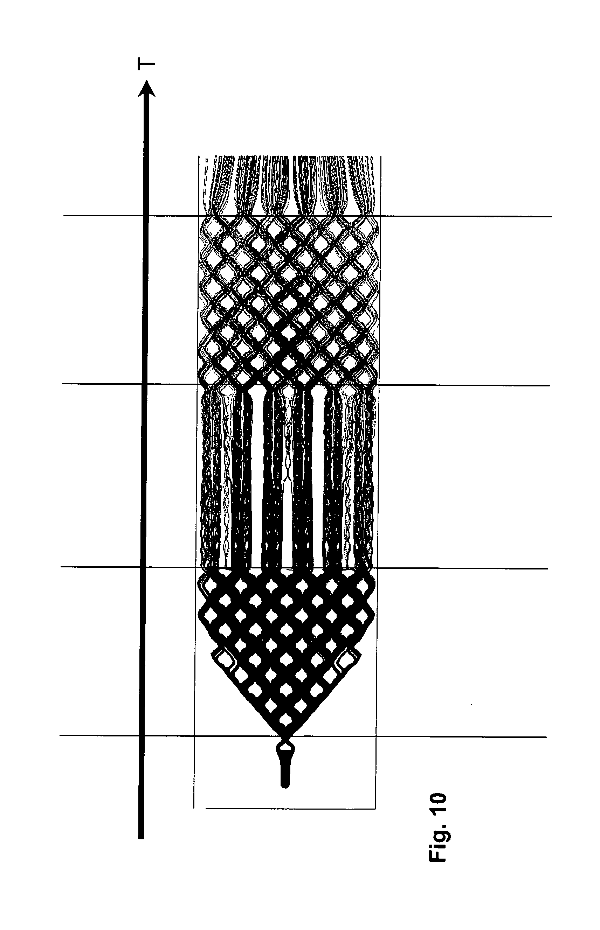

**Fig. 10** ist eine Darstellung von Stromlinien bei einer Strömung mit niedrigen Reynoldszahlen (laminare Verhältnisse) durch einen erfindungsgemässen Formkörper. Bei der Darstellung der Stromlinien wurde die durchströmte 3D-Struktur, d. h. der Innenraum des Formkörpers weggelassen. Die Stromlinien werden in der Ebene der Struktur, in der die treppenförmigen Stege liegen, sehr schnell aufgespreizt und über den gesamten Kanalquerschnitt verteilt, während in der Richtung senkrecht dazu kaum eine Dispersion feststellbar ist.

In einem erfindungsgemässen Herstellungsverfahren würde so jede Schicht mittels einer Schablone aufgetragen. Dabei können mehrere Lagen einer plastisch verformbaren Masse, im vorliegenden Fall eine Paste bestehend aus feinkörnigem Pulver (Korngrösse < 30 Mikrometer) des Edelstahls 1.4404 mit Wasser und einem organischen Binder bestehend aus Methylzellulose und geringen Mengen von weiteren Komponenten, wie unter anderem Natrium-Alkylbenzolsulfonat, Ethylen Glykol und Polyethylen Glycol, durch Ausnehmungen einer Schablone erzeugt werden, um die Treppenstufen einer ersten Schicht 2 zu erzeugen. Jede Lage der Schicht wird nach deren Auftragung getrocknet. Zur Beschleunigung der Trocknung können dabei erhöhte Temperaturen von z.B. 50°C und eine kontrollierte Atmosphäre mit geringer Luftfeuchtigkeit verwendet werden. Nachdem sämtliche Lagen der Schicht 2 durch die Schablone aufgebracht und getrocknet wurden, wird die zweite Schicht 2' der plastisch verformbaren Masse mit einer weiteren Schablone, wieder lagenweise aufgebracht und getrocknet. Nachdem die letzte beispielhaft gezeigte Schicht 2"" aufgetragen wurde, wird der fertige Formkörper im Ofen gesintert. Dabei wird in einem ersten Schritt bei reduzierter Temperatur von 500°-600°C der organische Binder vergast. Bei typischen Stegdimensionen von wenigen 100 Mikrometern dauert dieser Schritt rund 0.5 Stunden. Danach wird der eigentliche Sinterprozess bei Temperaturen um die 1200 - 1300 °C ebenfalls während rund 0.5 Stunden durchgeführt. Nach dem eigentlichen Sintern wird die Temperatur im Ofen langsam kontinuierlich reduziert und die Teile so abgekühlt. Das so erzeugte Formteil besteht dann aus gesintertem Edelstahl WNr. 1.4404 (X2CrNiMo 17-12-2, austenitischer, rostfreier Stahl).

Der erzeugte Formkörper 1 kann nachträglich bearbeitet, beschichtet, geschnitten, verklebt oder sonst wie prozessiert werden. Im einfachsten Fall wird er in eine Hülse gesteckt. Ein solcher einfacher Formkörper 1 kann zum Beispiel als statischer Mischer verwendet werden.

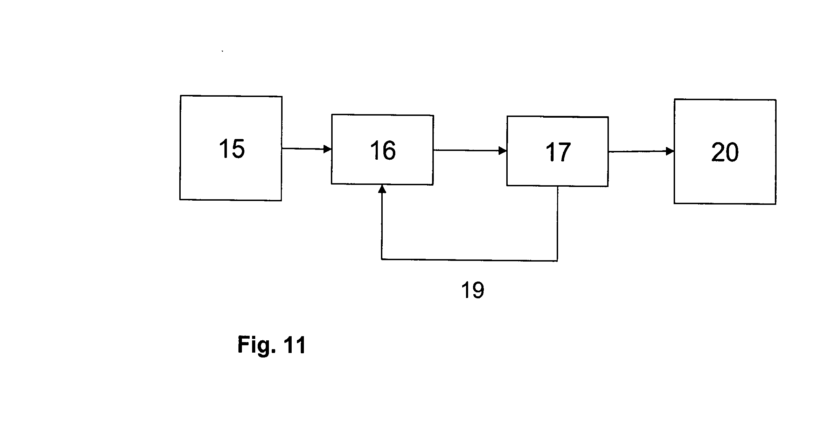

Modellhaft ist das erfindungsgemässe Herstellungsverfahren in **Fig. 11** gezeigt. Zunächst wir eine Schablone mit Ausnehmungen bereitgestellt 15. Die Ausnehmungen der Schablone legen die räumlichen Dimensionen einer ersten aufzutragenden Schicht fest, während gleichzeitig die festen Bestandteile der Schablone die späteren Aussparungen der einzelnen Schichten bilden. Durch die Schablone wird eine erste plastisch verformbare Masse aufgetragen 16, wie zum Beispiel die vorgängig genannte Paste bestehend aus feinkörnigem Pulver (Korngrösse < 30 Mikrometer) des Edelstahls 1.4404 mit Wasser und einem organischen Binder bestehend aus Methylzellulose und geringen Mengen von weiteren Komponenten, wie unter anderem Natrium-Alkylbenzolsulfonat, Ethylen Glykol und Polyethylen Glycol. Nachdem die Schablone entfernt wird, bleibt eine erste Schicht mit Aussparungen zurück. Mit der gleichen Schablone könnte eine weitere Lage mit identischem Profil aufgetragen werden. Mit einer weiteren Schablone wird nun auf der ersten Schicht eine weitere Schicht mit der plastisch verformbaren Masse aufgetragen 17. Dieser Schritt kann so oft wiederholt werden 17, wie Schichten aufgetragen werden sollen. Für jede Schicht wird im vorliegenden Beispiel eine eigene Schablone verwendet mit einem eigenen Muster, d.h einer eigenen Konfiguration an Ausnehmungen in der Schablone. Dabei werden die Schablonen so aufeinander folgend gewählt, dass die Ausnehmungen einer folgenden Schablone die bereits aufgetragene Schicht mindestens Kantenseitig berühren, wenn nicht sogar um bis zu 50 % der Oberfläche auf der die Schablone gesetzt wird überlappen.

Je nach verwendeter plastisch verformbarer Masse kann zwischen den einzelnen Auftragungsschritten 16, 17 ein Trocknungs- oder Härtungsschritt stattfinden. Im vorliegenden Beispiel wird, wenn der gewünschte Formkörper alle beabsichtigten Schichten aufweist, verfestigt 20. Dazu wird wie oben beschrieben gesintert.

Mit dem erfindungsgemässen Verfahren ist es möglich mit einer vergleichsweise geringen Anzahl unterschiedlicher Schablonen einen komplexen, funktionalen 3D-Formkörper zu kreieren.

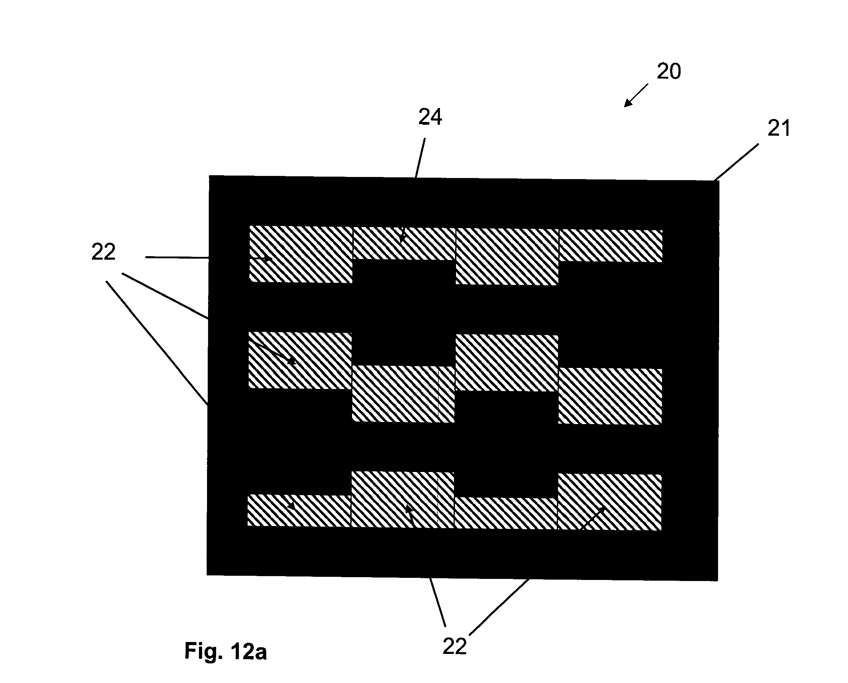

Ein Beispiel für eine Schablone 20 wie sie im erfindungsgemässen Verfahren verwendet werden kann, ist in der **Fig. 12a** gezeigt. Diese exemplarische Schablone 20 kann verwendet werden, um zum Beispiel die erste Schicht 2 des in der Fig. 2 gezeigten Formkörpers aufzutragen. Die Schablone 20 besteht aus Edelstahl und umfasst einen Körper aus dem ein bestimmtes Muster ausgefräst ist. Im vorliegenden Fall umfasst die Schablone 20 einen Edelstahlkörper 21 mit Ausnehmungen 22, welche ein Muster bilden das dem Muster der ersten Schicht 2 des in der Fig. 2 gezeigten Formkörpers 1 entspricht. An den Ausnehmungen 22 bilden sich nach dem Auftragen der plastisch verformbaren Masse die ersten Treppenstufen des Formkörpers 1 der Fig. 2 (ausgehend vom Betrachter). Da es sich um die erste Schicht 2 handelt sind zwischen den einzelnen Treppenstufen Verbindungsnähte vorgesehen. Diese werden durch plastisch verformbare Masse gebildet, welche auf der Schablone 20 durch die weiteren Ausnehmungen 24 aufgetragen wird. Der schwarze Bereich des Edelstahlkörpers 21 bildet in Bezug auf die Fig. 2 und den resultierenden Formkörper 1 eine Aussparung des Formkörpers 1. Die Ausnehmungen 22 und die damit erzeugten Treppenstufen können beispielsweise Kantenlängen von zwischen 10 µm und 10 mm aufweisen, je nach beabsichtigter Anwendung. Im vorliegenden Ausführungsbeispiel weisen die Ausnehmungen 22 Kantenlängen von 100 bis zu 250 µm auf.

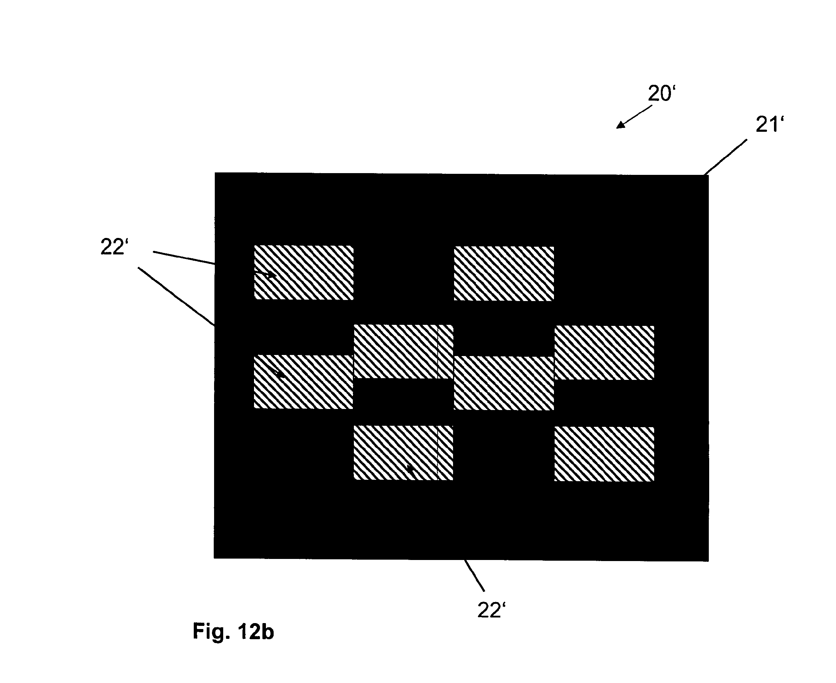

Eine weitere Schablone 20' ist in **Fig. 12b** gezeigt. Eine solche weitere Schablone 20' kann verwendet werden um eine weitere Schicht 2' der Fig. 2 aufzutragen. Die Schablone umfasst einen Edelstahlkörper 21' in dem Ausnehmungen 22' gefräst sind. Dabei sind die Ausnehmungen 22' in Bezug auf die Ausnehmungen 22 versetzt angeordnet, nämlich so, dass, beispielhaft zur Herstellung eines Formkörpers 1 nach Fig. 2, die Hälfte der Oberseite der bereits aufgetragenen Treppenstufen Schicht 2 durch die Ausnehmungen 22' sichtbar bleibt. Somit ergibt sich ein überlappender Bereich der eine Verbundfläche zwischen den Schichten 2 und 2' bildet. Durch die Ausnehmungen 22' wird die besagte plastisch verformbare Masse aufgetragen. Der Edelstahlkörper 21' wird ausgespart, d.h. er bildet eine Aussparung im Formkörper 1. Die somit von den Edelstahlkörpern 21, 21' im Verbund gebildeten gesamten Aussparungen des gesamten Formkörpers 1 bilden ein Innenvolumen im fertigen Formkörper 1. Die Schablonen 20, 20' und die Anordnungen der Ausnehmungen sind so gewählt, dass ein zusammenhängendes, in vollständiger Fluidverbindung ausgestaltetes Innenvolumen entsteht. Ein solches Innenvolumen wäre von einem Fluid ohne Totzonen durchströmbar und, z.B. als statischer Mischer verwendbar.

## Patentansprüche

1. Formkörper (1) der in mindestens einer Strömungsrichtung (T) von einem Fluid durchströmbar ist, umfassend
a) eine Vielzahl von zueinander parallelen, aufeinander folgenden Schichten (2, 2', 2", 2"', 2"") und wobei jede Schicht (2, 2', 2", 2"', 2"") mindestens eine Aussparung aufweist, und wobei
b) jede Schicht (2, 2', 2", 2"', 2"") mindestens eine Verbundfläche (5) mit einer folgenden oder vorangegangenen Schicht (2, 2', 2", 2"', 2"") aufweist, und wobei
c) jede Aussparung einer Schicht (2, 2', 2", 2"', 2"") mindestens einen Bereich der Aussparung einer folgenden oder vorangegangen Schicht (2, 2', 2", 2"', 2"") überlappt, so dass
d) die Schichten (2, 2', 2", 2"', 2"") insgesamt im Formkörper (1) treppenförmige Stege (2a, 2b) ausbilden,
**dadurch gekennzeichnet, dass** der Formkörper (1) mindestens zwei solche Stege (2a, 2b) umfasst.

2. Formkörper (1) gemäss Anspruch 1, wobei die mindestens zwei Stege (2a, 2b) im Formkörper (1) derart ausgestaltet sind, dass sie sich kreuzen.

3. Formkörper (1) gemäss einem der Ansprüche 1 oder 2, wobei der Formkörper (1) eine Ummantelung (4) aufweist, welche parallel zu der mindestens einen Strömungsrichtung (T) verläuft, insbesondere ist die Ummantelung (4) integraler Bestandteil des Formkörpers (1), bevorzugt ist der gesamte Formkörper (1) einstückig ausgebildet.

4. Formkörper (1) gemäss einem der Ansprüche 1 bis 3, wobei die Gesamtheit der Aussparungen des Formkörpers (1) ein durchströmbares Innenvolumen des Formkörpers ausbilden.

5. Formkörper (1) gemäss einem der Ansprüche 1 bis 4, wobei der Formkörper (1) zwischen 2 und 50 Schichten (2, 2', 2", 2"', 2""), insbesondere zwischen 2 und 20 Schichten, insbesondere zwischen 3 und 15 Schichten (2, 2', 2", 2"', 2"") aufweist.

6. Formkörper (1) gemäss einem der Ansprüche 1 bis 5, wobei die Stege (2a, 2b) so ausgestaltet sind, dass sie in einem im Wesentlichen rechten Winkel zueinander gekreuzt sind.

7. Formkörper (1) gemäss einem der Ansprüche 1 bis 6, wobei die Schichten (2, 2', 2", 2"', 2"") parallel zur mindestens einen Strömungsrichtung (T) verlaufen, oder wobei die Schichten rechtwinklig zur mindestens einen Strömungsrichtung (T) verlaufen.

8. Formkörper (1) gemäss einem der Ansprüche 3 bis 7, wobei die Ummantelung Ausnehmungen und/oder Lamellen und/oder Rippen aufweist.

9. Verwendung eines Formkörpers (1) gemäss Anspruch 1 als statischer Mischer, oder als Wärmetauscher oder zur Emulgierung oder zur Schäumung oder zur Durchführung von katalysierten chemischen Reaktionen oder zur Dekontamination oder zur Vaporisation oder zur Kondensation, oder zur Ausfällung von Stoffen, Substanzen oder Bestandteilen welche Fluid - Eigenschaften aufweisen.

10. Verfahren zur Herstellung eines Formkörpers (1), insbesondere eines Formkörpers gemäss Anspruch 1, umfassend die Schritte:
a) Bereitstellen (15) einer Schablone (20; 20') mit Ausnehmungen (22, 24);
b) Auftragen einer plastisch verformbare Masse (16) durch die Schablone (20; 20') zu einer ersten Schicht, wobei die plastisch verformbare Masse durch die Ausnehmungen (22, 24) auf ein Trägermedium gelangt;
c) Auftragen einer folgenden Schicht einer weiteren plastisch verformbaren Masse (17) auf die erste Schicht durch eine zweite Schablone (20; 20'), und wobei die zweite Schablone (20, 20') derart ausgestaltet ist, dass die folgende Schicht mindestens eine Verbundfläche (5) mit der vorangegangenen Schicht aufweist;
d) Wiederholen (19) des Schrittes c) bis die gewünschte Anzahl Schichten erreicht wird, und wobei jede Schicht durch eine passende, zugehörige Schablone (20, 20') aufgetragen wird;
e) Verfestigen des Formkörpers, insbesondere durch Erwärmung, insbesondere durch Versinterung.

11. Verfahren gemäss Anspruch 10, wobei die erste Schicht nach dem Auftragen (16) gehärtet wird und wobei die folgenden Schichten vor Auftragen (17) einer allfälligen nächsten Schicht gehärtet werden, und wobei insbesondere die Schichten durch trocknen gehärtet werden.

12. Verfahren gemäss Anspruch 10 oder 11, wobei eine Schicht aus mindestens zwei unterschiedlichen plastisch verformbare Massen mittels unterschiedlicher Schablonen hergestellt wird.

13. Verfahren gemäss einem der Ansprüche 10 bis 12, wobei zusätzlich zu den Schichten eine Ummantelung aus weiterem plastisch verformbaren Material aufgetragen wird.

14. Verfahren gemäss einem der Ansprüche 10 bis 13, wobei eine Schicht wiederholte einzelne Lagen umfasst, welche durch dieselbe Schablone aufgetragen werden.

15. Statischer Mischer zum Mischen von Fluiden umfassend einen Formkörper gemäss Anspruch 1.
